# EUROPÄISCHE PATENTANMELDUNG

(11) **EP 4 775 623 A1**
(43) Veröffentlichungstag der Anmeldung: **15.07.2026**
(21) Anmeldenummer: 26151376.6
(22) Anmeldetag: 12.01.2026
(51) Int. Cl.: C08J 9/00, B29C 44/50, C08J 9/12, C08J 9/16, C08J 9/232

(54) **VERFAHREN ZUR HERSTELLUNG VON THERMOPLASTISCHEM POLYMERSCHAUM, SOLCHERMASSEN HERGESTELLTER POLYMERSCHAUM UND POLYMERSCHAUM-FORMTEIL AUS MITEINANDER VERSCHWEISSTEN PARTIKELN AUS EINEM SOLCHEN POLYMERSCHAUM**

(30) Priorität: 13.01.2025 DE 102025100931
(71) Anmelder: Fraunhofer-Gesellschaft zur Förderung der angewandten Forschung e.V., 80686 München (DE)
(72) Erfinder: GEERDS, Jan Robert, 76327 Pfinztal (DE); BITZER, Benedikt, 76327 Pfinztal (DE)
(74) Vertreter: Lichti - Patentanwälte Partnerschaft mbB

(57) **Zusammenfassung**

Es wird ein Verfahren zur Herstellung von thermoplastischem Polymerschaum mit thermoplastischen Polymeren aus der Gruppe der Polyamide vorgeschlagen, welches die folgenden Schritte umfasst:
(a) Aufgeben eines thermoplastischen Polymers aus der Gruppe der Polyamide in einen Extruder sowie Plastifizieren und Homogenisieren des Polymers in dem Extruder;
(b) Zusetzen eines Treibmittels und Eindispergieren des Treibmittels in die plastifizierte Polymermatrix des Polymers in dem Extruder; und
(c) Ausbringen des mit dem Treibmittel versetzten, plastifizierten Polymers auf Polyamidbasis aus dem Extruder durch eine Extruderdüse unter Erhalt eines Strangs aus dem thermoplastischen Polymerschaum.

Die Erfindung sieht vor, dass das thermoplastische Polymer aus der Gruppe der Polyamide unter Ausschluss von Vernetzungsmitteln und/oder Kettenverlängerungsmittel extrudiert wird, wobei dem Extruder ferner ein Anteil Wasser zugesetzt und in die plastifizierte Polymermatrix des Polymers aus der Gruppe der Polyamide in dem Extruder eindispergiert wird. Die Erfindung betrifft ferner einen derart hergestellten thermoplastischen Polymerschaum auf Polyamidbasis.

## Beschreibung

Die Erfindung betrifft ein Verfahren zur Herstellung von thermoplastischem Polymerschaum, welcher wenigstens 50 Mass.-% wenigstens eines thermoplastischen Polymers aus der Gruppe der Polyamide enthält oder im Wesentlichen gänzlich hieraus gebildet ist, umfassend die folgenden Schritte:
(a) Aufgeben wenigstens eines thermoplastischen Polymers aus der Gruppe der Polyamide oder eines Polymer-Blends mit wenigstens 50 Mass.-% wenigstens eines solchen thermoplastischen Polymers aus der Gruppe der Polyamide in einen Extruder sowie Plastifizieren und Homogenisieren des wenigstens einen thermoplastischen Polymers aus der Gruppe der Polyamide oder des Polymer-Blends mit wenigstens 50 Mass.-% des wenigstens einen thermoplastischen Polymer aus der Gruppe der Polyamide in dem Extruder;
(b) Zusetzen von wenigstens einem Treibmittel und Eindispergieren des wenigstens einen Treibmittels in die plastifizierte Polymermatrix; und
(c) Ausbringen des wenigstens einen, mit dem wenigstens einen Treibmittel versetzten, plastifizierten thermoplastischen Polymers aus der Gruppe der Polyamide oder des mit dem wenigstens einen Treibmittel versetzten Polymer-Blends mit wenigstens 50 Mass.-% des wenigstens einen thermoplastischen Polymers aus der Gruppe der Polyamide aus dem Extruder durch wenigstens eine Extruderdüse unter Erhalt wenigstens eines Strangs aus dem thermoplastischen Polymerschaum.

Die Erfindung bezieht sich ferner auf einen solchermaßen hergestellten thermoplastischen Polymerschaum, welcher wenigstens 50 Mass.-% wenigstens eines thermoplastischen Polymers aus der Gruppe der Polyamide enthält oder im Wesentlichen gänzlich hieraus gebildet ist, auf zumindest teilweise offenporige Polymerschaumpartikel aus einem solchen thermoplastischen Polymerschaum sowie auf ein Partikelschaum-Formteil mit einer Mehrzahl an miteinander verschweißten, zumindest teilweise offenporigen Polymerschaumpartikeln der vorgenannten Art.

Thermoplastische Polymerschäume, welcher ein oder mehrere thermoplastische(s) Polymer(e) aus der Gruppe der Polyamide und gegebenenfalls weitere Blend-Partner mit einem demgegenüber geringeren Anteil enthalten sind in vielfältiger Ausgestaltung bekannt. Zur Herstellung solcher thermoplastischer Polymerschäume auf der Basis von Polyamiden mittels Extrusion wird das wenigstens eine thermoplastische Polymer aus der Gruppe der Polyamide in einem Schritt (a) zunächst einem Extruder aufgegeben und in dem Extruder plastifiziert und homogenisiert. Dem Extruder wird sodann wenigstens ein Treibmittel zugesetzt, bei welchem es sich um ein chemisches oder rein physikalisches Treibmittel handeln kann, wobei das wenigstens eine Treibmittel in die plastifizierte Polymermatrix des wenigstens einen thermoplastischen Polymers aus der Gruppe der Polyamide in dem Extruder eindispergiert wird. Schließlich wird das mit dem wenigstens einen Treibmittel versetzte, plastifizierte thermoplastische Polymers aus der Gruppe der Polyamide in einem Schritt (c) durch wenigstens eine Extruderdüse aus dem Extruder ausgebracht, um wenigstens einen Extrusionsstrang aus dem thermoplastischen Polymerschaum zu erhalten.

Als problematisch bei solchen Extrusionsschäumen auf der Basis von Polyamiden erweist sich insbesondere die nur geringe Schmelzefestigkeit von plastifizierten Polyamiden, welche bewirkt, dass mittels des Treibmittels aufgeschäumte Poren zum Kollabieren neigen, so dass der Herstellung von Polymerschäumen auf Polyamidbasis mit sehr geringen Dichten Grenzen gesetzt sind. So lassen sich gegenwärtig nur Extrusionsschäume auf Polyamidbasis mit Dichten von oberhalb etwa 200 g/l herstellen. Um geringere Dichten von Polymerschäumen auf Polyamidbasis erzielen, bedient man sich in der Praxis Vernetzungs- und/oder Kettenverlängerungsmitteln, welche den Polyamiden zugesetzt werden, was jedoch einerseits teuer und wenig umweltfreundlich ist, andererseits erhält der Polymerschaum mit zunehmendem Vernetzungsgrad mehr und mehr elastische bis hin zu duroplastischen Eigenschaften, welche ein Recycling des Polymerschaums praktisch unmöglich machen. Lediglich beispielhaft sei in diesem Zusammenhang erwähnt, dass für Schaumanwendungen geeignete amorphe Polymere, wie z.B. Polystyrol (PS) oder UMS (ultra melt strength) Polypropylen (PP), oder auch mittels Kettenverlängern modifizierte Polyamide üblicherweise eine Schmelzviskosität im Bereich von etwa 0,5 N bis etwa 1,5 N aufweisen, wohingegen nicht modifizierte Polyamide, wie z.B. Polyamid-6 (PA6), eine Schmelzviskosität von unter 0,05 N besitzen (jeweils ermittelt bei einer Temperatur von 15°C oberhalb der Schmelztemperatur mittels des Rheotens^{™}-Verfahrens der Firma GÖTTFERT Werkstoff-Prüfmaschinen GmbH (Deutschland) zur Messung der Dehnviskosität und Auszugsfähigkeit von Polymerschmelzen, indem ein Schmelzestrang mit beschleunigten Walzen mit einer Abzugsgeschwindigkeit zwischen 10 mm/s und 200 mm/s abgezogen worden ist, bis er riss).

Darüber hinaus stellt die Teilkristallinität von Polyamiden ein Problem bei der Herstellung von Polymerschäumen dar. Während vornehmlich amorphe thermoplastische Polymere in einem breiten Temperaturbereich verarbeitet werden können, wobei die Schmelzeviskosität durch Variation der Verarbeitungstemperatur bis in den Schmelztemperaturbereich eingestellt werden kann, verfestigen sich Polyamide, bei welchen es sich grundsätzlich um teilkristalline Polymere handelt, mehr oder minder schlagartig infolge Kristallisation, so dass ein nur sehr eingeschränkter Bereich einer geeigneten Verarbeitungstemperatur zur Verfügung steht. Um auch bei relativ hohen Temperaturen (oberhalb des Kristallisationsbereiches) eine hinreichend hohe Schmelzefestigkeit zu gewährleisten, bediente man sich bislang ebenfalls geeigneter Kettenverlängerungs- und/oder Vernetzungsmittel zur Modifikation der Polymermatrix.

Der Erfindung liegt die Aufgabe zugrunde, ein Verfahren zur Herstellung von thermoplastischem Polymerschaum auf der Basis von Polyamiden der eingangs genannten Art auf einfache und kostengünstige Weise dahingehend weiterzubilden, dass unter zumindest weitgehender Vermeidung der vorgenannten Nachteile thermoplastische Polyamidschäume geringer Dichte erhalten werden können. Sie ist ferner auf einen solchermaßen hergestellten thermoplastischen Polymerschaum auf der Basis von Polyamiden der eingangs genannten Art, auf zumindest teilweise offenporige Polymerschaumpartikel aus einem solchen thermoplastischen Polymerschaum aus der Basis von Polyamiden sowie auf ein Partikelschaum-Formteil mit einer Mehrzahl solcher miteinander verschweißter, zumindest teilweise offenporige Polymerschaumpartikel auf der Basis von Polyamiden gerichtet.

In verfahrenstechnischer Hinsicht wird diese Aufgabe bei einem Verfahren Herstellung von thermoplastischem Polymerschaum auf der Basis von Polyamiden der eingangs genannten Art dadurch gelöst, dass das wenigstens eine thermoplastische Polymer aus der Gruppe der Polyamide oder der Polymer-Blend mit wenigstens 50 Mass.-% des wenigstens einen thermoplastischen Polymers aus der Gruppe der Polyamide unter Ausschluss von Vernetzungsmitteln und/oder Kettenverlängerungsmittel extrudiert wird, wobei dem Extruder ferner ein Anteil Wasser zugesetzt und in die plastifizierte Polymermatrix des wenigstens einen thermoplastischen Polymers aus der Gruppe der Polyamide oder des Polymer-Blends mit wenigstens 50 Mass.-% des wenigstens einen thermoplastischen Polymers aus der Gruppe der Polyamide in dem Extruder eindispergiert wird.

In erzeugnistechnischer Hinsicht sieht die Erfindung zur Lösung dieser Aufgabe ferner einerseits einen solchermaßen hergestellten thermoplastischen Polymerschaum vor, welcher wenigstens 50 Mass.-% wenigstens eines thermoplastischen Polymers aus der Gruppe der Polyamide enthält oder im Wesentlichen gänzlich hieraus gebildet ist, wobei der Polymerschaum frei von Vernetzungsmitteln und/oder Kettenverlängern ist.

Überraschenderweise wurde gefunden, dass durch den Einsatz von Wasser bei der Extrusion unter Entbehrlichmachung des Einsatzes von Vernetzungs- und/oder Kettenverlängerungsmitteln die Schaumdichten und auch die Offenporigkeit der Schaumstruktur von teilkristallinen Polyamiden oder Polymer-Blends, welche überwiegend solche teilkristallinen Polyamide enthalten, erheblich verbessert werden können, wobei beispielsweise extrudierte Schäume aus Polyamid-6 (PA6) mit Dichten weit unterhalb von 100 kg/m³ und Copolyamiden hiervon mit Dichten unterhalb von 70 kg/m³ erzeugt werden können. Obwohl Wasser potenziell hydrolytische Eigenschaften besitzt (d.h. die Polymerketten des Polyamides tendieren in Gegenwart von Wasser zur hydrolytischen Spaltung während der Verarbeitung) und die Verwendung von Wasser während des Extrudierens somit zunächst kontraintuitiv erscheint, wirkt Wasser unter anderem nach Art eines Weichmachers und ermöglicht so die Senkung der Prozesstemperatur, was nicht nur in einem geringeren Energieaufwand durch geringeres Drehmoment und Heizung des Extruders resultiert, sondern insbesondere durch seine hohe Verdunstungsenthalpie eine schnellere Abkühlung und dadurch bedingte schnelle Stabilisierung des Schaumstrangs nach seinem Austritt aus der Extruderdüse bewirkt, so dass die frisch erzeugte, vornehmlich offenzellige Schaumstruktur trotz Treibmittelaustritt nicht kollabiert. Die geringe Schmelzefestigkeit der Polyamide wird erfindungsgemäß folglich dadurch kompensiert, dass aufgrund der hohen Verdunstungsenthalpie des Wassers eine schnelle Kristallisation der Polyamidketten stattfindet, ohne dass die in der Polymermatrix gebildete Porenstruktur kollabiert.

Auf diese Weise können Schaumzellen früher und in größerer Zahl gebildet und die Zellmorphologie durch die schnellere Abkühlung stabilisiert werden, was zu kleineren Zelldurchmessern und in der Summe zu geringeren Dichten des Polyschaums auf Polyamidbasis führt. Es wird vermutet, dass sich die "kleinen" Wassermoleküle auch zwischen den "langen" Polyamidketten anlagern und auf diese Weise deren (nicht kovalente) Bindung schwächen, so dass der Schmelzpunkt des Polyamides abgesenkt wird, was geringere Massentemperaturen des plastifizierten Polyamides in einer Kühl- oder Austrittszone des Extruder, d.h. in dem unmittelbar stromauf der Austrittsdüse(n) des Extruders angeordneten Axialabschnitt des Extruders, bis weit unterhalb des eigentlichen Schmelzpunktes des jeweiligen Polyamides im herkömmlichen "trockenen" Zustand erlaubt. Zudem hat sich gezeigt, dass die mit Wasser angereicherte Schmelze des wenigstens einen plastifizierten Polyamides mit deutlich mehr Treibmittel versetzt werden kann, ohne dass der Polymerschaum unmittelbar nach dem Austritt aus der Extruderdüse kollabiert, was wiederum in der Möglichkeit der Erzielung von sehr geringen Schaumdichten resultiert, wie es bislang nur mit einem gewissen Vernetzungsgrad der verarbeiteten Polyamide möglich war. Dies wird unter anderem auf die sehr schnelle Stabilisierung bzw. Erstarrung des Extrudates aufgrund der hohen Verdunstungsenthalpie des enthaltenen Wassers zurückgeführt, so dass der Zellbildungsprozess aus Zellwachstum infolge Treibmittelexpansion und Zellstabilisierung deutlich schneller vonstattengeht, sobald das plastifizierte Polyamid aus der Extruderdüse ausgebracht worden ist.

Im direkten Vergleich expandieren Polyamidschäume ohne Wasserzugabe nach dem Austritt aus der Extruderdüse später, in geringerem Maß und kühlen langsamer ab, so dass sich Zellen im Schaumzentrum zu gröberen Strukturen zusammenschließen und insbesondere offene Poren zum Kollabieren neigen. Dementgegen kann durch die erfindungsgemäße Zugabe von Wasser zusätzlich zur Variation der Prozesstemperatur und daraus resultierender Abkühldauer die Zellgröße und Offenporigkeit der Polymerschaumpartikel angepasst werden. Das Abkühlen des gemäß Schritt (c) aus der Extruderdüse ausgebrachten Stangs aus dem thermoplastischen Polymerschaum auf Polyamidbasis kann im Übrigen grundsätzlich in beliebiger bekannter Weise geschehen, sei es z.B. rein konvektiv in Umgebungsluft, sei es z.B. in einer Gasströmung oder sei es z.B. in einem flüssigen Kühlmedium, wie beispielsweise Wasser oder dergleichen. Die Erfindung bietet sich hierbei für Polymer-Blends an, welche zu einem überwiegenden Anteil von wenigstens etwa 50 Mass.-%, insbesondere von wenigstens etwa 60 Mass.-%, vorzugsweise von wenigstens etwa 70 Mass.-%, höchst vorzugsweise von wenigstens etwa 80 Mass.-%, wie z.B. von wenigstens etwa 90 Mass.-%, Polyamide enthalten, sowie für im Wesentlichen reine Polyamide.

Das erfindungsgemäße Verfahren bietet sich insbesondere, wenngleich nicht ausschließlich für teilkristalline Polyamide an, welche aufgrund ihrer sehr geringen Schmelzefestigkeit, ihrer hohen Kristallinität und/oder ihrer geringen Molmasse bislang nicht zu Polymerschäumen mit geringer Dichte und offenporiger Schaumstruktur verarbeitet werden konnten. So kann in vorteilhafter Ausgestaltung beispielsweise vorgesehen sein, dass das wenigstens eine thermoplastische Polymer aus der Gruppe der Polyamide oder der Polymer-Blend mit wenigstens 50 Mass.-% des wenigstens einen thermoplastischen Polymers aus der Gruppe der Polyamide
- eine Schmelzefestigkeit von höchstens etwa 0,25 N, insbesondere von höchstens etwa 0,20 N, vorzugsweise von höchstens etwa 0,15 N, wie beispielsweise von höchstens etwa 0,10 N, z.B. von höchstens etwa 0,075 N oder von höchstens etwa 0,05 N, jeweils ermittelt bei einer Temperatur von 15°C oberhalb der Schmelztemperatur mittels des Rheotens^{™}-Verfahrens der Firma GÖTTFERT Werkstoff-Prüfmaschinen GmbH (Deutschland) zur Messung der Dehnviskosität und Auszugsfähigkeit von Polymerschmelzen, indem ein Schmelzestrang mit beschleunigten Walzen mit einer Abzugsgeschwindigkeit zwischen 10 mm/s und 200 mm/s abgezogen wird, bis er reißt; und/oder
- eine Schmelzenthalpie von wenigstens etwa 5 J/g, insbesondere von wenigstens etwa 10 J/g, vorzugsweise von wenigstens etwa 20 J/g, wie beispielsweise von wenigstens etwa 25 J/g, z.B. von wenigstens etwa 30 J/g oder von wenigstens etwa 35 J/g; und/oder
- eine mittlere Molmasse von höchstens etwa 200 kg/mol, insbesondere von höchstens etwa 150 kg/mol, vorzugsweise von höchstens etwa 100 kg/mol,
aufweist.

Der Anteil an Wasser, welcher dem wenigstens einen plastifizierten Polymer aus der Gruppe der Polyamide in dem Extruder zugesetzt wird, beträgt zweckmäßigerweise
- wenigstens etwa 0,1 Mass.-%, insbesondere wenigstens etwa 0,25 Mass.-%, vorzugsweise wenigstens etwa 0,5 Mass.-%, höchst vorzugsweise wenigstens etwa 0,75 Mass.-%, wie beispielsweise wenigstens etwa 1 Mass.-% oder wenigstens etwa 1,5 Mass.-%, und/oder
- höchstens etwa 7,5 Mass.-%, insbesondere höchstens etwa 5 Mass.-%, vorzugsweise höchstens etwa4 Mass.-%, wie beispielsweise höchstens etwa 3,5 Mass.-% oder höchstens etwa 3 Mass.-%,
bezogen auf die Gesamtmasse der plastifizierten Polymermatrix.

Während das erfindungsgemäße Verfahren grundsätzlich auch den Einsatz von chemischen Treibmitteln erlaubt, kann in vorteilhafter Ausgestaltung vorgesehen sein, dass dem Extruder wenigstens ein physikalisches Treibmittel zugesetzt wird. Beispiele vorteilhafter physikalischer Treibmittel umfassen insbesondere - wenngleich nicht ausschließlich - dann, wenn der erzeugte Polymerschaum auf Polyamidbasis eine vornehmlich offenporige Schaumstruktur besitzen soll, solche mit hohem Dampfdruck, wie z.B. Stickstoff (N₂), Kohlenstoffdioxid (CO₂), kurzkettige Alkane, vorzugsweise mit 1 bis 6 Kohlenstoffatomen, wie Methan, Ethan, Propan, n-Butan, iso-Butan, n-Pentan, iso-Pentan, Cyclopentan, Hexane, etc. Das wenigstens eine Treibmittel kann je nach gewünschter Schaumdichte ferner zweckmäßigerweise mit einem Anteil zwischen etwa 0,5 Mass.-% und etwa 10 Mass.-%, insbesondere zwischen etwa 1 Mass.-% und etwa 7,5 Mass.-%, wie beispielsweise zwischen etwa 1,5 Mass.-% und etwa 5 Mass.-%, jeweils bezogen auf den Massenanteil an Polymer, zugesetzt werden.

Wie bereits angedeutet, macht es das erfindungsgemäße Verfahren aufgrund des Zusatzes von Wasser insbesondere möglich, dass das wenigstens eine thermoplastische Polymer aus der Gruppe der Polyamide oder der Polymer-Blend mit wenigstens 50 Mass.-% des wenigstens einen thermoplastischen Polymers aus der Gruppe der Polyamide in einer Kühlzone des Extruders bei einer Massentemperatur unterhalb seiner Schmelztemperatur extrudiert wird, d.h. die Schmelze des wenigstens einen thermoplastischen Polymers aus der Gruppe der Polyamide kann, nachdem es in einer Aufschmelz- bzw. Kompressionszone des Extruders, z.B. im Bereich seiner Schmelztemperatur, plastifiziert worden ist, in der Kühl- bzw. Austrittszone des Extruders mehr oder minder stark, wie z.B. je nach Polyamid bis zu etwa 50°C, unterkühlt werden, bevor das Extrudat aus der Extruderdüse ausgebracht wird. Wird das Polyamid in der Kühlzone des Extruders bei einer Massentemperatur unterhalb seiner Schmelztemperatur extrudiert, so ergibt sich eine erhöhte Schmelzestabilität bei einer relativ kurzen Abkühldauer und folglich schnellen Erstarrung des Polyamidstrangs nach Verlassen der Extruderdüse.

In diesem Zusammenhang kann insbesondere vorgesehen sein, dass wenigstens ein Parameter aus der Gruppe Dichte, Porengröße und Offenporigkeit des thermoplastischen Polymerschaums auf Polyamidbasis durch Einstellung der Massentemperatur des wenigstens einen thermoplastischen Polymers aus der Gruppe der Polyamide während des Extrudierens in der Kühlzone des Extruders gesteuert wird. Während die Dichte des Polymerschaums auf der Basis von Polyamiden auch vornehmlich durch die Art und den Anteil an Treibmittel gesteuert werden kann, wobei tendenziell mit zunehmendem Treibmittelanteil geringere Dichten erzielt werden können, ermöglicht eine Variation der Massentemperatur des Polyamides in Gegenwart von Wasser eine Steuerung der Porengröße und Porenstruktur des erhaltenen Polyamidschaums, wobei Massentemperaturen in der Kühl- bzw. Austrittszone des Extruders weit unterhalb des Schmelzpunktes des jeweiligen Polyamides tendenziell zu einem vornehmlich geschlossenporigen Polyamidschaum mit sehr geringer Dichte führen, während höhere Massentemperaturen in der Kühl- bzw. Austrittszone des Extruders unterhalb bis in den Bereich des Schmelzpunktes des jeweiligen Polyamides tendenziell zu einem vornehmlich offenporigen Polyamidschaum mit etwas höheren Dichten führen. So kann beispielsweise zur Erzielung einer sehr geringen Dichte eines Polyamidschaums von z.B. weniger als etwa 70 g/l eine z.B. um etwa 37°C gegenüber dem Schmelzpunkt des jeweiligen Polyamides geringere Massentemperatur in der Kühl- bzw. Austrittszone des Extruders während der Extrusion eingestellt und große Mengen an Treibmittel zugesetzt werden. Sofern vornehmlich offenporige Polyamidschäume erwünscht sind, können ferner - wie oben erwähnt - Treibmittel mit relativ hohem Dampfdruck, wie z.B. Stickstoff, Kohlenstoffdioxid, Argon etc., eingesetzt werden, welche einen zur Öffnung der Zellwände der infolge Expansion des Treibmittels erzeugten Poren hinreichend hohen Poreninnendruck erzeugen.

Bei einem solchermaßen hergestellten Polymerschaum, welcher wenigstens 50 Mass.-% wenigstens eines thermoplastischen Polymers aus der Gruppe der Polyamide enthält oder im Wesentlichen gänzlich hieraus gebildet und ferner frei von Vernetzungs- und/oder Kettenverlängerungsmitteln ist, ist es demnach möglich, dass er eine Dichte von höchstens etwa 200 g/l, insbesondere von höchstens etwa 125 g/l, vorzugsweise von höchstens etwa 100 g/l, höchst vorzugsweise von wenigstens 75 g/l, aufweist, wobei - sofern gewünscht - selbstverständlich auch beliebige höhere Dichten des Polyamidschaums erreicht werden können, wenn beispielsweise ein entsprechend geringer Anteil an Treibmittel zugesetzt wird. Ein solchermaßen hergestellter Polymerschaum kann ferner ein Hohlraumvolumen besitzen, welches wenigstens etwa 70 Vol.-% seines Gesamtvolumens, insbesondere wenigstens etwa 75 Vol.% seines Gesamtvolumens, vorzugsweise wenigstens etwa 80 Vol.-% seines Gesamtvolumens, höchst vorzugsweise wenigstens etwa 85 Vol.-% seines Gesamtvolumens, wie beispielsweise wenigstens etwa 90 Vol.-% seines Gesamtvolumens, beträgt, jeweils ermittelt mittels eines Gaspyknometers.

Gemäß einer Weiterbildung kann das erfindungsgemäße Verfahrens ferner den folgenden, auf den Schritt (c) folgenden Schritt umfassen:
(d) Granulieren des extrudierten und mit dem wenigstens einen Treibmittel versetzten Strangs aus dem thermoplastischen Polymerschaum, welcher wenigstens 50 Mass.-% des wenigstens einen thermoplastischen Polymers aus der Gruppe der Polyamide enthält oder im Wesentlichen gänzlich hieraus gebildet ist, unter Bildung von zumindest teilweise offenporigen Polymerschaumpartikeln.

Demnach kann der gemäß Schritt (c) aus dem Extruder ausgebrachte und abgekühlte Strang aus dem thermoplastischen Polymerschaum auf Polyamidbasis unter Bildung von Polymerschaumpartikeln entsprechend deren gewünschten Partikelgrößen granuliert werden, welche zumindest an ihren Schnittflächen vornehmlich offenporig sind.

Die Erfindung betrifft auch solchermaßen hergestellte Polymerschaumpartikel aus einem thermoplastischen Polymerschaum auf Polyamidbasis, welche zumindest teilweise offenporig sind und z.B. zur Erzeugung von Partikelschaum-Formteilen verwendet werden können.

Dementsprechend kann in Weiterbildung des erfindungsgemäßen Verfahrens überdies vorgesehen sein, dass die zumindest teilweise offenporigen Polymerschaumpartikel auf Polyamidbasis zu einem Partikelschaum-Formteil verschweißt werden.

Dies kann beispielsweise in als solcher bekannter Weise dadurch geschehen, indem die Polymerschaumpartikel einem Formwerkzeug aufgegeben und in dem Formwerkzeug mittels Heißdampf zu dem Formteil verschweißt werden, wobei der Heißdampf dem Formwerkzeug entweder direkt zugeführt oder mittels Einkopplung von hochfrequenter elektromagnetischer Strahlung erzeugt werden kann, oder die Polymerschaumpartikel werden unter Exposition mit heißem Gas, wie z.B. Luft, in einem Heißluftofen miteinander verschweißt. Während die Polymerschaumpartikel auf Polyamidbasis dabei durch entsprechenden Druck im Wesentlichen vollflächig miteinander verschweißt werden können, kann stattdessen beispielsweise auch vorgesehen sein, dass die Polymerschaumpartikel auf Polyamidbasis nicht vollflächig, also nur teilweise an diskreten Oberflächenbereichen, miteinander verschweißt werden, so dass zwischen den Polymerschaumpartikeln offene Zwischenräume gebildet sind, welche ein Netzwerk aus miteinander korrespondierenden Kanälen zwischen den Polymerschaumpartikeln im Innern des Polymerschaum-Formteils bilden. Sind die Polymerschaumpartikel dabei selbst zumindest teilweise offenporig, so können deren (intrapartikulären) offenen Poren gleichfalls mit dem (interpartikulären) Netzwerk aus miteinander korrespondierenden Kanälen der Zwischenräume zwischen den Polymerschaumpartikeln in Verbindung stehen, so dass ein weit verzweigtes Netzwerk aus Zwischenräumen und Poren unterschiedlicher Größe erzeugt wird, wie es beispielsweise zur effektiven Schalldämpfung vorteilhaft sein kann.

Die Erfindung betrifft auch ein solchermaßen hergestelltes Partikelschaum-Formteil mit einer Mehrzahl an miteinander verschweißten, zumindest teilweise offenporigen Polymerschaumpartikeln auf Polyamidbasis.

Ein solches Partikelschaum-Formteil kann entweder aus einer Vielzahl von Polymerschaumpartikeln auf Polyamidbasis mit im Wesentlichen gleicher Größe und/oder Geometrie gebildet sein, oder es kann stattdessen auch zumindest teilweise offenporige Polymerschaumpartikel mit unterschiedlicher Partikelgröße und/oder mit unterschiedlicher Porengröße enthalten, was insbesondere dann von Vorteil sein kann, wenn die Polymerschaumpartikel nicht vollflächig miteinander verschweißt sind und in deren Zwischenräumen ein Netzwerk von Kanälen mit unterschiedlichen Durchmessern gebildet sein soll, welches vorzugsweise auch mit den offenen Poren der einzelnen Polymerschaumpartikel auf Polyamidbasis kommuniziert, wie es insbesondere zur effektiven Schalldämpfung vorteilhaft ist.

Folglich kann gemäß einer vorteilhaften Ausführungsvariante eines erfindungsgemäßen Partikelschaum-Formteils auf Polyamidbasis vorgesehen sein, dass die zumindest teilweise offenporigen Polymerschaumpartikel nicht vollflächig miteinander verschweißt sind, so dass zwischen den zumindest teilweise offenporigen Polymerschaumpartikeln offene Zwischenräume gebildet sind, welche ein Netzwerk aus sowohl miteinander als auch mit den offenen Poren der Polymerschaumpartikel korrespondierenden Kanälen zwischen den Polymerschaumpartikeln im Innern des Polymerschaum-Formteils bilden.

Der mittlere Durchmesser der offenen Zwischenräume zwischen den zumindest teilweise offenporigen Polymerschaumpartikeln kann dabei vorzugsweise von dem mittleren Durchmesser der offenen Poren der zumindest teilweise offenporigen Polymerschaumpartikel verschieden sein, wobei vornehmlich zum Zwecke einer sehr wirksamen Schalldämpfung der mittlere Durchmesser der offenen Zwischenräume zwischen den zumindest teilweise offenporigen Polymerschaumpartikeln insbesondere wenigstens etwa dem 50-fachen, vorzugsweise wenigstens etwa dem 100-fachen, höchst vorzugsweise wenigstens etwa dem 250-fachen, wie beispielsweise wenigstens etwa dem 500-fachen, des mittleren Durchmessers der offenen Poren der zumindest teilweise offenporigen Polymerschaumpartikel beträgt.

Das erfindungsgemäße Polymerschaum-Formteil auf Polyamidbasis eignet sich aufgrund seiner hervorragenden Schalldämpfungseigenschaften insbesondere zur akustischen Dämpfung, aber auch zur thermischen und/oder mechanischen Isolierung, als Filtermaterial und/oder zu Belüftungszwecken, wobei es im letztgenannten Fall ein Netzwerk aus offenen Zwischenräumen zwischen den, vorzugsweise ihrerseits zumindest teilweise offenporigen, Polymerschaumpartikeln auf Polyamidbasis besitzen sollte, wie es vorstehend beschrieben ist. In Bezug auf eine Verwendung des Polymerschaum-Formteils auf Polyamidbasis zu akustischen Dämpfungszwecken sind möglichen Anwendungsgebieten praktisch keine Grenzen gesetzt, wobei beispielhaft eine Verminderung von Geräuschemissionen bei Elektrogeräten, wie Elektrowerkzeugen, Küchengeräten, Gartengeräten oder dergleichen, oder ein Einsatz als Dämmstoffelemente in der Bau-, Fahrzeug-, Flugzeugindustrie etc. erwähnt sei.

Nachstehend ist die Erfindung anhand von Ausführungsbeispielen unter Bezugnahme auf die Zeichnungen näher erläutert. Dabei zeigen:
- Fig. 1 bis 3: je eine mikroskopische Aufnahme der offenzelligen Schaumstruktur von Polymerschaumsträngen aus einer Mischung aus Polyamid 6 und Polyamid 6.6 (PA6/6.6), welche bei verschiedenen Extrusionsbedingungen erzeugt worden sind; und
- Fig. 4: eine fotographische Ansicht einer Ausführungsform eines erfindungsgemäßen Polymerschaum-Formteils, welches durch Verschweißen von Polymerschaumpartikeln aus einem der Polymerstränge gemäß den Fig. 1 bis 3 erzeugt worden ist.

### Ausführungsbeispiel 1:

Zur Herstellung von Platten aus Polymerschaum aus einer Mischung aus thermoplastischem Polyamid 6 und Polyamid 6.6 (PA6/6.6) mit einer mittleren Molmasse von 133 kg/mol wurden 30 kg/h PA6/6.6 des Typs "Nylon 5034B" (UBE Corporation Europa S.A.U., Spanien) mit einem Schmelzpunkt von etwa 192°C, einer Schmelzefestigkeit von etwa 0,045 N (bei 205°C; ermittelt mittels des Rheotens^{™}-Verfahrens) und einem Schmelzflussindex MFI von etwa 3,3 cm³/10 min (bei 205°C und 5 kg) ohne Zugabe von Vernetzungs- und/oder Kettenverlängerungsmitteln einem Extruder des Typs "Schaumtandex-Laboratory Extrusion Line ZE 30/KE 60" aufgegeben.

Zur Plastifizierung und Homogenisierung des PA6/6.6 wurde in einer Plastifizierungs- bzw. Kompressionszone des Extruders eine Temperatur von etwa 230°C eingestellt und wurden dem Extruder 3 Massenanteile Kohlenstoffdioxid (CO₂) als Treibmittel pro 100 Massenanteilen des Polyamides zugesetzt, wohingegen das PA6/6.6 bei einer Massentemperatur von etwa 180°C in der Kühl- bzw. Austrittszone des Extruders unmittelbar stromauf der Austrittsdüsen extrudiert wurde, wonach es unter Verwendung einer Mehrlochdüse aus dem Extruder ausgebracht wurde. Die auf diese Weise erzeugte Schaumplatte wies dabei eine sehr inhomogene Schaumstruktur bei einer Dichte von 662 g/l auf.

Der Extrusionsvorgang des PA6/6.6 wurde sodann unter zusätzlicher Zugabe von 2,0 Massenanteilen Wasser - wiederum ohne Zugabe von Vernetzungs- und/oder Kettenverlängerungsmitteln - in das plastifizierte PA6/6.6 wiederholt, wobei die Massentemperatur des PA6/6.6 in der Kühl-. bzw. Austrittszone des Extruders auf 155°C, also etwa 37°C unterhalb der Schmelztemperatur des PA6/6.6, abgesenkt und der Anteil an Treibmittel (CO₂) auf 4 Massenanteile, wiederum jeweils bezogen auf 100 Massenanteile des Polyamids, erhöht werden konnte. Die nunmehr auf erfindungsgemäße Weise erzeugte Schaumplatte auf Polyamidbasis wies eine gleichmäßige Schaumstruktur bei einer sehr geringen Dichte von 69 g/l auf.

### Ausführungsbeispiel 2:

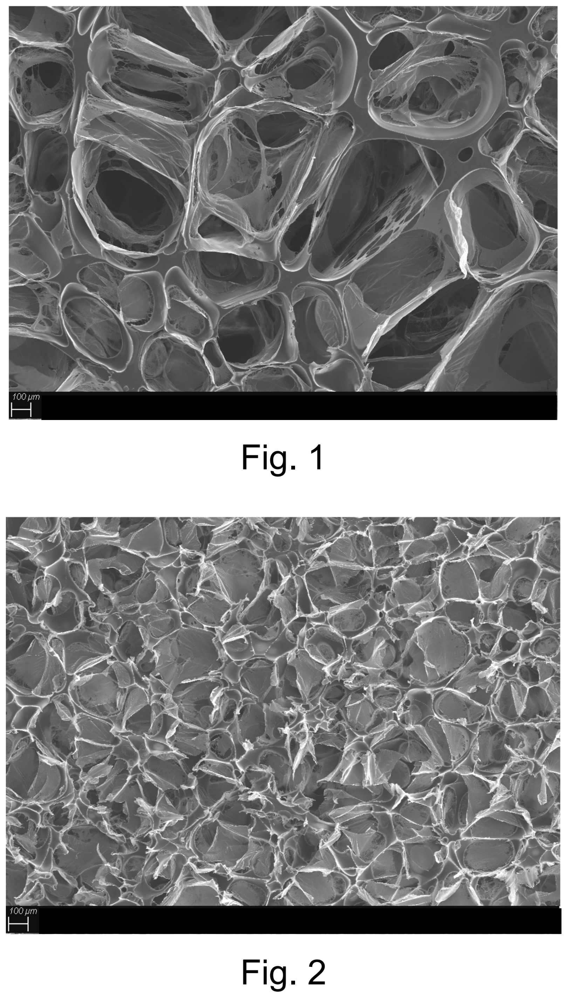

Zur Herstellung des in der Fig. 1 anhand einer mikroskopischen Ansicht seiner Schaumstruktur wiedergegebenen Polymerschaumstrangs aus einer Mischung aus thermoplastischem Polyamid 6 und Polyamid 6.6 (PA6/6.6) mit einer mittleren Molmasse von 133 kg/mol wurden 4 kg/h PA6/6.6 des Typs "Nylon 5034B" (UBE Corporation Europa S.A.U., Spanien) mit einem Schmelzpunkt von etwa 192°C, einer Schmelzefestigkeit von etwa 0,045 N (bei 205°C; ermittelt mittels des Rheotens^{™}-Verfahrens) und einem Schmelzflussindex MFI von etwa 3,3 cm³/10 min (bei 205°C und 5 kg) ohne Zusatz von Vernetzungs- und/oder Kettenverlängerungsmitteln in einem Extruder des Typs "Leistritz Micro 27 40 D Doppelschneckenextruder" plastifiziert und homogenisiert sowie einerseits mit 2,25 Massenanteilen Kohlenstoffdioxid (CO₂) als Treibmittel, andererseits mit 2,6 Massenanteilen Wasser, jeweils pro 100 Massenanteilen des Polyamids, versetzt. Das mit Kohlendioxid und Wasser versetzte PA6/6.6 wurde sodann in der Kühl- bzw. Austrittszone des Extruders unmittelbar stromauf der Austrittsdüse bei einer Massentemperatur von 165°C extrudiert und zu Schaumsträngen mit einer Dichte von 90 g/l extrudiert, welche ausweislich der REM-Aufnahme der Fig. 1 eine deutlich offenzellige Schaumstruktur besitzen.

Wie aus der Fig. 2 ersichtlich, welche eine mikroskopische Ansicht der Schaumstruktur desselben Polyamides (PA6/6.6) zeigt, führte eine Absenkung der Massentemperatur des PA6/6.6 in der Kühl- bzw. Austrittszone des Extruders während der Extrusion auf nunmehr 150°C bei geringfügiger Erhöhung des Anteils an CO₂ von 2,25 auf 2,5 Massenanteile bei ansonsten identischen Bedingungen zu Schaumsträngen mit einer noch geringeren Dichte von 73 g/l Dichte und etwas geringerer Offenporigkeit.

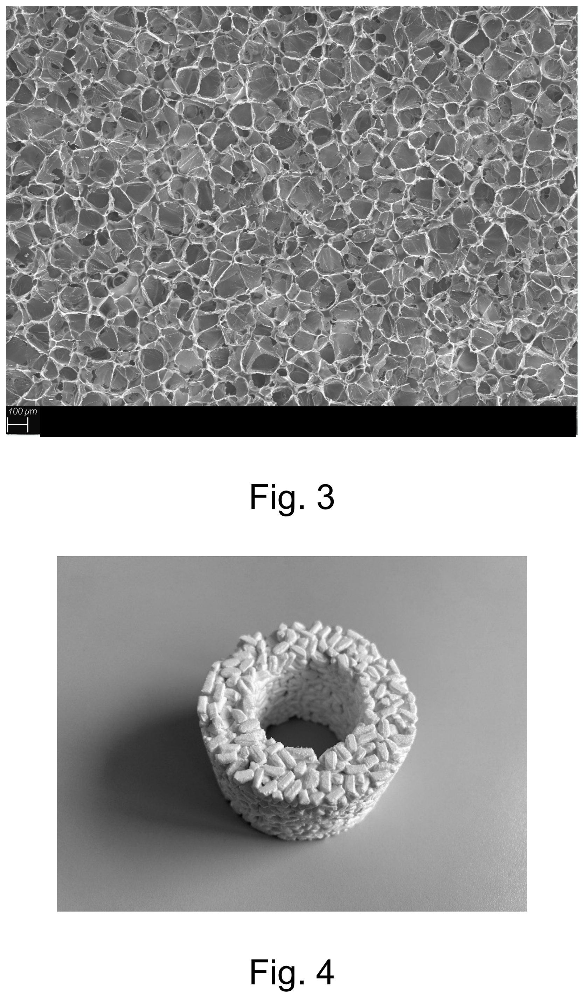

Durch eine weitere Senkung der Massentemperatur in der Kühl- bzw. Austrittszone des Extruders während der Extrusion auf 145°C bei gleichzeitiger Erhöhung des Anteils an CO₂ auf 3 Massenanteile bei ansonsten wiederum identischen Bedingungen wurden Schaumstränge mit nochmals geringeren Dichten von 52 g/l mit deutlich kleineren Porendurchmessern erhalten (vgl. die Fig. 3), wobei deutlich wird, dass sich die Schaumstruktur sowie insbesondere der Durchmesser und die Offenporigkeit der Poren des erhaltenen Polymerschaumstrangs auf Polyamidbasis in breiten Grenzen steuern lässt.

Zur Erzeugung von Polymerschaum-Formteilen aus im vorliegenden Fall nicht vollflächig miteinander verschweißten, vornehmlich offenporigen Polymerschaumpartikeln aus PA6/6.6 des oben beschriebenen Typs, wie eines exemplarisch in der Fig. 4 fotografisch dargestellt ist, wurden die Polymerschaumstränge der Fig. 1 bis 3 zu den vornehmlich offenporigen Polymerschaumpartikeln mit einer Schüttdichte von etwa 125 kg/m³ bis etwa 140 kg/m³ granuliert. Zum thermischen Verschweißen der Polymerschaumpartikel zu dem Polymerschaum-Formteil wurden erstere in ein vorgeheiztes, offenes Formwerkzeug aus Edelstahl überführt und in einem Heißluftofen mit heißer Luft erwärmt. Hierzu wurden die abgewogenen Polymerschaumpartikel auf Polyamidbasis in das vorgeheizte Formwerkzeug eingefüllt und dort gleichmäßig verteilt, woraufhin die in dem offenen Formwerkzeug befindlichen Polymerschaumpartikel mit einer Verschlussplatte aus Metall bedeckt wurden, welche nicht an dem Formwerkzeug fixiert, sondern demgegenüber höhenverschiebbar war. Auf der Verschlussplatte wurden Abstandhalter platziert, um die gewünschte Höhe des Polymerschaum-Formteils einzustellen. Zum Verdichten der Polymerschaumpartikel unter dem gewünschten Druck wurden Gewichte auf den Anstandshaltern platziert, welche die Polymerschaumpartikel während des Verscheißens bis zu der gewünschten Höhe komprimierten, bei welcher sichergestellt war, dass die Polymerschaumpartikel nicht vollflächig miteinander verbunden werden, so dass zwischen den Polymerschaumpartikeln offene Zwischenräume gebildet werden, welche ein Netzwerk aus sowohl miteinander als auch mit den offenen Poren der offenporigen Polymerschaumpartikel korrespondierenden Kanälen zwischen den Polymerschaumpartikeln im Innern des Polymerschaum-Formteils bilden. Schließlich wurden die Polymerschaumpartikel auf diese Weise über einen Zeitraum zwischen etwa 15 min und etwa 120 min bei einer Temperatur zwischen etwa 183°C und etwa 194°C zu dem Polymerschaum-Formteil der Fig. 4 miteinander verschweißt.

Das Polymerschaum-Formteil auf Polyamidbasis, welches aufgrund der unterschiedlichen mittleren Durchmesser einerseits der miteinander in Verbindung stehenden (interpartikulären) Zwischenräume zwischen den nur teilflächig miteinander verschweißten Polymerschaumpartikeln und andererseits der ebenfalls mit diesen Zwischenräumen in Verbindung stehenden (interpartikulären) offenen Poren der einzelnen Polymerschaumpartikel sogenannte "Double-Porosity-Eigenschaften" aufweist, wurde ferner auf seine Schalldämpfungseigenschaften untersucht, indem eine Probe des Polymerschaum-Formteils mit einer Dicke von 20 mm einem senkrechten Schalleinfall exponiert wurde. In der nachstehenden Tabelle sind die hieraus rechnerisch zumindest zu erwartenden Schallabsorptionsgrade αs, welche durch das Verhältnis von absorbierter zu auftreffender Schallenergie definiert sind, für diffusen Schalleinfall bei verschiedenen Frequenzen zusammengestellt, wobei auffällt, dass auch für relativ niederfrequenten Schall im Bereich zwischen etwa 125 Hz und etwa 2000 Hz gute Schalldämpfungseigenschaften erzielt werden können, welche bei einem herkömmlichen Polymerschaum ohne Double-Porosity-Eigenschaften etwa die vierfache Dicke des Polymerschaumformteils erforderten:

| Schallfrequenz [Hz] | 125 | 250 | 500 | 1000 | 2000 | 4000 |
|---|---|---|---|---|---|---|
| Schallabsorptionsgrad as | 0,15 | 0,25 | 0,35 | 0,70 | 0,70 | 0,70 |

## Patentansprüche

1. Verfahren zur Herstellung von thermoplastischem Polymerschaum, welcher wenigstens 50 Mass.-% wenigstens eines thermoplastischen Polymers aus der Gruppe der Polyamide enthält oder im Wesentlichen gänzlich hieraus gebildet ist, umfassend die folgenden Schritte:
(a) Aufgeben wenigstens eines thermoplastischen Polymers aus der Gruppe der Polyamide oder eines Polymer-Blends mit wenigstens 50 Mass.-% wenigstens eines solchen thermoplastischen Polymers aus der Gruppe der Polyamide in einen Extruder sowie Plastifizieren und Homogenisieren des wenigstens einen thermoplastischen Polymers aus der Gruppe der Polyamide oder des Polymer-Blends mit wenigstens 50 Mass.-% des wenigstens einen thermoplastischen Polymer aus der Gruppe der Polyamide in dem Extruder;
(b) Zusetzen von wenigstens einem Treibmittel und Eindispergieren des wenigstens einen Treibmittels in die plastifizierte Polymermatrix; und
(c) Ausbringen des wenigstens einen, mit dem wenigstens einen Treibmittel versetzten, plastifizierten thermoplastischen Polymers aus der Gruppe der Polyamide oder des mit dem wenigstens einen Treibmittel versetzten Polymer-Blends mit wenigstens 50 Mass.-% des wenigstens einen thermoplastischen Polymers aus der Gruppe der Polyamide aus dem Extruder durch wenigstens eine Extruderdüse unter Erhalt wenigstens eines Strangs aus dem thermoplastischen Polymerschaum,
**dadurch gekennzeichnet, dass** das wenigstens eine thermoplastische Polymer aus der Gruppe der Polyamide oder der Polymer-Blend mit wenigstens 50 Mass.-% des wenigstens einen thermoplastischen Polymers aus der Gruppe der Polyamide unter Ausschluss von Vernetzungsmitteln und/oder Kettenverlängerungsmittel extrudiert wird, wobei dem Extruder ferner ein Anteil Wasser zugesetzt und in die plastifizierte Polymermatrix des wenigstens einen thermoplastischen Polymers aus der Gruppe der Polyamide oder des Polymer-Blends mit wenigstens 50 Mass.-% des wenigstens einen thermoplastischen Polymers aus der Gruppe der Polyamide in dem Extruder eindispergiert wird.

2. Verfahren nach Anspruch 1, **dadurch gekennzeichnet, dass** das wenigstens eine thermoplastische Polymer aus der Gruppe der Polyamide oder der Polymer-Blend mit wenigstens 50 Mass.-% des wenigstens einen thermoplastischen Polymers aus der Gruppe der Polyamide
- eine Schmelzefestigkeit von höchstens 0,25 N, insbesondere von höchstens 0,20 N, vorzugsweise von höchstens 0,15 N, jeweils ermittelt bei einer Temperatur von 15°C oberhalb der Schmelztemperatur; und/oder
- eine Schmelzenthalpie von wenigstens 5 J/g, insbesondere von wenigstens 10 J/g, vorzugsweise von wenigstens 20 J/g; und/oder
- eine mittlere Molmasse von höchstens 200 kg/mol, insbesondere von höchstens 150 kg/mol, vorzugsweise von höchstens 100 kg/mol,
aufweist.

3. Verfahren nach Anspruch 1 oder 2, **dadurch gekennzeichnet, dass** dem Extruder
(a) ein Anteil Wasser
- von wenigstens 0,1 Mass.-%, insbesondere von wenigstens 0,25 Mass.-%, vorzugsweise von wenigstens 0,5 Mass.-%, höchst vorzugsweise von wenigstens 0,75 Mass.-%, und/oder
- von höchstens 7,5 Mass.-%, insbesondere von höchstens 5 Mass.-%, vorzugsweise von höchstens 4 Mass.-%,
bezogen auf die Gesamtmasse der plastifizierten Polymermatrix; und/oder
(b) - wenigstens ein physikalisches Treibmittel, und/oder
- ein Anteil zwischen 0,5 Mass.-% und 10 Mass.-%, insbesondere zwischen 1 Mass.-% und 7,5 Mass.-%, an dem wenigstens einen Treibmittel,
zugesetzt wird.

4. Verfahren nach einem der Ansprüche 1 bis 3, **dadurch gekennzeichnet, dass** das wenigstens eine thermoplastische Polymer aus der Gruppe der Polyamide oder der Polymer-Blend mit wenigstens 50 Mass.-% des wenigstens einen thermoplastischen Polymers aus der Gruppe der Polyamide in einer Kühlzone des Extruders bei einer Massentemperatur unterhalb seiner Schmelztemperatur extrudiert wird.

5. Verfahren nach einem der Ansprüche 1 bis 4, **dadurch gekennzeichnet, dass** wenigstens ein Parameter aus der Gruppe Dichte, Porengröße und Offenporigkeit des thermoplastischen Polymerschaums durch Einstellung der Massentemperatur des wenigstens einen thermoplastischen Polymers aus der Gruppe der Polyamide während des Extrudierens in der Kühlzone des Extruders gesteuert wird.

6. Verfahren nach einem der Ansprüche 1 bis 5, **gekennzeichnet durch** den folgenden, auf den Schritt (c) folgenden Schritt:
(d) Granulieren des extrudierten und mit dem wenigstens einen Treibmittel versetzten Strangs aus dem thermoplastischen Polymerschaum, welcher wenigstens 50 Mass.-% des wenigstens einen thermoplastischen Polymers aus der Gruppe der Polyamide enthält oder im Wesentlichen gänzlich hieraus gebildet ist, unter Bildung von zumindest teilweise offenporigen Polymerschaumpartikeln.

7. Verfahren nach Anspruch 6, **dadurch gekennzeichnet, dass** die zumindest teilweise offenporigen Polymerschaumpartikel insbesondere zu einem Partikelschaum-Formteil verschweißt werden.

8. Thermoplastischer Polymerschaum, welcher wenigstens 50 Mass.-% wenigstens eines thermoplastischen Polymers aus der Gruppe der Polyamide enthält oder im Wesentlichen gänzlich hieraus gebildet ist, wobei der Polymerschaum frei von Vernetzungsmitteln und/oder Kettenverlängern ist, hergestellt gemäß einem Verfahren nach einem der Ansprüche 1 bis 5.

9. Thermoplastischer Polymerschaum nach Anspruch 8, **dadurch gekennzeichnet, dass** er
- eine Dichte von höchstens 200 g/l, insbesondere von höchstens 125 g/l, vorzugsweise von höchstens 100 g/l, höchst vorzugsweise von wenigstens 75 g/l; und/oder
- ein Hohlraumvolumen, welches wenigstens 70 Vol.-% seines Gesamtvolumens, insbesondere wenigstens 75 Vol.% seines Gesamtvolumens, vorzugsweise wenigstens 80 Vol.-% seines Gesamtvolumens, höchst vorzugsweise wenigstens 85 Vol.-% seines Gesamtvolumens, beträgt,
aufweist.

10. Polymerschaumpartikel aus einem thermoplastischen Polymerschaum nach Anspruch 8 oder 9, welche zumindest teilweise offenporig sind, hergestellt gemäß einem Verfahren nach Anspruch 6.

11. Partikelschaum-Formteil mit einer Mehrzahl an miteinander verschweißten, zumindest teilweise offenporigen Polymerschaumpartikeln nach Anspruch 10, hergestellt gemäß einem Verfahren nach Anspruch 7.

12. Partikelschaum-Formteil nach Anspruch 11, **dadurch gekennzeichnet, dass** es zumindest teilweise offenporige Polymerschaumpartikel mit unterschiedlicher Partikelgröße und/oder mit unterschiedlicher Porengröße enthält.

13. Partikelschaum-Formteil nach Anspruch 11 oder 12, **dadurch gekennzeichnet, dass** die zumindest teilweise offenporigen Polymerschaumpartikel nicht vollflächig miteinander verschweißt sind, so dass zwischen den zumindest teilweise offenporigen Polymerschaumpartikeln offene Zwischenräume gebildet sind, welche ein Netzwerk aus sowohl miteinander als auch mit den offenen Poren der Polymerschaumpartikel korrespondierenden Kanälen zwischen den Polymerschaumpartikeln im Innern des Polymerschaum-Formteils bilden.

14. Partikelschaum-Formteil nach einem der Ansprüche 11 bis 13, **dadurch gekennzeichnet, dass** der mittlere Durchmesser der offenen Zwischenräume zwischen den zumindest teilweise offenporigen Polymerschaumpartikeln von dem mittleren Durchmesser der offenen Poren der zumindest teilweise offenporigen Polymerschaumpartikel verschieden ist, wobei der mittlere Durchmesser der offenen Zwischenräume zwischen den zumindest teilweise offenporigen Polymerschaumpartikeln insbesondere wenigstens dem 50-fachen, vorzugsweise wenigstens dem 100-fachen, höchst vorzugsweise wenigstens dem 250-fachen, des mittleren Durchmessers der offenen Poren der zumindest teilweise offenporigen Polymerschaumpartikel beträgt.

15. Verwendung eines Partikelschaum-Formteils nach einem der Ansprüche 11 bis 14 zur akustischen Dämpfung, zur thermischen und/oder mechanischen Isolierung, als Filtermaterial oder zu Belüftungszwecken.
